# EUROPEAN PATENT APPLICATION

(11) **EP 4 190 466 A1**
(43) Date of publication of application: **07.06.2023**
(21) Application number: 21815868.1
(22) Date of filing: 11.11.2021
(51) Int. Cl.: B22F 10/25, B22F 12/41

(54) **METAL 3D PRINTER**

(30) Priority: 12.10.2021 KR 20210135342
(71) Applicant: SFS CO., LTD., Ulsan 44776 (KR)
(72) Inventor: BAE, Sungwoo, Ulsan 44656 (KR); JI, Seungmuk, Incheon 21995 (KR); BAE, Hyungryun, Gyeonggi-do 13499 (KR); CHOO, Heonjae, Ulsan 44532 (KR)
(74) Representative: Isarpatent
(86) International application number: PCT/KR2021/016383
(87) International publication number: WO 2023/063471

(57) **Abstract**

Disclosed is a metal 3D printer. According to the present invention, the metal 3D printer for applying heat energy to metal powder through irradiation of a laser beam onto the metal powder to create a solid object is characterized in that a diameter of the laser beam is adjustable according to a particle diameter of the metal powder. The metal 3D printer according to the present invention can adjust the diameter of the laser beam according to the particle diameter of the metal powder to thus create the solid object with high precision and excellent mechanical properties.

## Description

### [Technical Field]

The present invention relates to a metal 3D printer, and more specifically, to a metal 3D printer that is capable of adjusting a diameter of a laser beam according to a particle size of metal powder to thus create a solid object with a high degree of precision.

### [Background Art]

Generally, a 3D printer is a device for making a three-dimensional object from a 3D drawing. At the early stage of 3D printer development, the 3D printer is used to make objects for limited purposes using plastic materials, but recently, the 3D printer makes use of various print materials such as metals, ceramics, nylons, and the like. Through the 3D printer, accordingly, various products such as cell phone cases, automobile accessories, and the like are created so that the 3D printer becomes increasingly applied to overall industrial fields.

Most of industrial metal 3D printers adopt selective laser sintering (SLS) in which metal powder is first applied and only a desired portion of the applied metal powder is melted by a laser to create a solid object.

The SLS is a technology that selectively irradiates a laser onto metal powder applied to a bed to thus sinter the metal powder and then applies metal powder, which is repeatedly carried out to form a plurality of layers. The SLS technology can help high value-added 3D printers popularized, and as the powder materials not sintered serve as supports, stable processing can be performed. Further, various application fields and a wide range of materials available can be ensured so that when considering strengths of materials, many advantages can be provided.

On the other hand, the metal 3D printers may adopt selective laser melting (SLM). The SLM is a technology that selectively irradiates a high-power ytterbium-fiber laser onto metal powder to thus melt the metal powder, applies metal powder laminatedly, flattens the surface of the metal powder using a recoater, and supplies an inert gas (argon, nitrogen, and the like) to a chamber to thus prevent the metal powder from being oxidized while the metal powder is being melted.

In the case of the 3D printer using metal powder, a laser beam is irradiated onto the metal powder having constant distribution, and a diameter of the laser beam has a great relation with the precision of a created solid object and object-creating time.

In specific, the laser beam oscillated by a laser beam engine is used with a constant size, and when a relatively large portion is sintered through the laser beam having the constant size, accordingly, it does not matter. When a minute portion is sintered, however, the size of the laser beam may be larger than the size of the minute portion sintered, which undesirably lowers a degree of precision in the shape of the minute portion.

To solve such problems, according to lots of prior art documents, the diameter (spot size) of the laser beam is varied according to the region of an object being created, so that optimal creation speed and precision can be selectively obtained according to the divided regions of the object being created.

When the laser beam is irradiated onto the powder, heat energy is also transmitted to the powder, so that the powder is sintered or melted to create the solid object. In this process, however, pores may be produced among the particles of the powder, which causes the created object to be undesirably deformed.

Therefore, there is a definite need to develop a new metal 3D printer capable of minimizing the formation of pores among the particles of metal powder to create a solid object with high precision.

### [Disclosure]

### [Technical Problem]

Accordingly, the present invention has been made in view of the above-mentioned problems occurring in the related art, and it is an object of the present invention to provide a metal 3D printer that is capable of adjusting a diameter of a laser beam according to a particle size of metal powder to thus create a solid object with high precision and excellent mechanical properties.

The technical problems to be achieved through the present invention are not limited as mentioned above, and other technical problems not mentioned herein will be obviously understood to one of ordinary skill in the art through the following description.

### [Technical Solution]

To accomplish the above-mentioned objects, according to the present invention, there is provided a metal 3D printer for applying heat energy to metal powder through irradiation of a laser beam onto the metal powder to create a solid object, wherein a diameter of the laser beam is adjustable according to a particle diameter of the metal powder.

According to the present invention, desirably, the metal 3D printer may include a laser irradiation part having a laser beam oscillator for oscillating the laser beam, a beam expander for adjusting the diameter of the laser beam oscillated from the laser beam oscillator, and a beam scanner for scanning the laser beam passing through the beam expander to irradiate the laser beam onto a target position.

According to the present invention, desirably, the diameter of the laser beam is 0.4 to 0.7 times smaller than the particle diameter of the metal powder.

According to the present invention, desirably, the diameter of the laser beam is 0.5 times smaller than the particle diameter of the metal powder.

### [Advantageous Effects]

According to the present invention, the metal 3D printer has the following advantages.

Firstly, the diameter of the laser beam is adjustable according to the particle size of the metal powder, and in specific, the diameter of the laser beam is desirably 0.4 to 0.7 times, more desirably 0.5 times smaller than the particle diameter of the metal powder, thereby creating the solid object with high precision and excellent mechanical properties.

Secondly, the diameter of the laser beam is desirably 0.4 to 0.7 times, more desirably 0.5 times smaller than the particle diameter of the metal powder, and accordingly, the heat energy is applied a plurality of times to the metal powder, thereby creating the solid object with high precision and excellent mechanical properties.

The effects of the present invention are not limited thereto, and other effects of the present invention will be clearly understood to those skilled in the art from the following description.

### [Description of Drawings]

FIG. 1 is a schematic view showing a metal 3D printer according to the present invention.
FIG. 2 is a schematic view showing a laser irradiation part of the metal 3D printer according to the present invention.
FIGs. 3a and 3b are schematic views showing the relation between a laser beam and metal powder of the metal 3D printer according to the present invention.
FIG. 4 is a photograph showing a test example of the metal 3D printer according to the present invention.
FIG. 5 is a graph showing the measured results in the test example of the metal 3D printer according to the present invention.
FIGs. 6a and 6b are enlarged photographs showing the test example of the metal 3D printer according to the present invention.
FIG. 7 is a graph showing measured results of a comparison example of the metal 3D printer according to the present invention.
FIGs. 8a and 8b are enlarged photographs showing the comparison example of the metal 3D printer according to the present invention.

### [Mode for Invention]

The present invention may be modified in various ways and may have several exemplary embodiments. Specific exemplary embodiments of the present invention are illustrated in the drawings and described in detail in the detailed description. Objects, characteristics and advantages of the present invention will be more clearly understood from the detailed description as will be described below and the attached drawings. However, this does not limit the invention within specific embodiments and it should be understood that the invention covers all the modifications, equivalents, and replacements within the idea and technical scope of the invention.

Terms, such as the first, and the second, may be used to describe various elements, but the elements should not be restricted by the terms. The terms are used to only distinguish one element from the other element. For example, a first element may be named a second element without departing from the scope of the present invention. Likewise, a second element may be named a first element. An expression referencing a singular value additionally refers to a corresponding expression of the plural number, unless explicitly limited otherwise by the context. In this application, terms, such as "comprise", "include", or "have", are intended to designate those characteristics, numbers, steps, operations, elements, or parts which are described in the specification, or any combination of them that exist, and it should be understood that they do not preclude the possibility of the existence or possible addition of one or more additional characteristics, numbers, steps, operations, elements, or parts, or combinations thereof.

In the description, the thicknesses of the lines or the sizes of the components shown in the drawing may be magnified for the clarity and convenience of the description. Therefore, they should be defined on the basis of the whole scope of the present invention.

Hereinafter, the present invention is disclosed with reference to the attached drawings wherein the corresponding parts in the embodiments of the present invention are indicated by corresponding reference numerals and the repeated explanation on the corresponding parts will be avoided.

The present invention relates to a metal 3D printer that is capable of adjusting a diameter of a laser beam according to a particle size of metal powder to thus create a solid object with high precision and excellent mechanical properties.

First, an explanation of a metal 3D printer 1000 according to the present invention will be given.

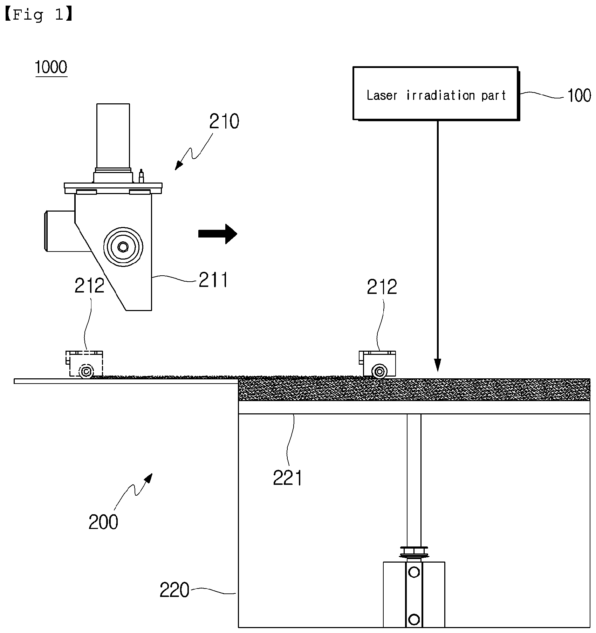

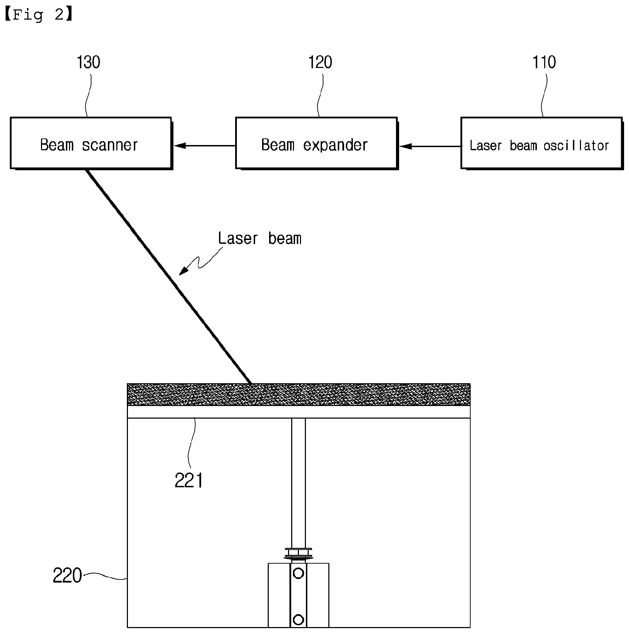

FIG. 1 is a schematic view showing a metal 3D printer according to the present invention, and FIG. 2 is a schematic view showing a laser irradiation part of the metal 3D printer according to the present invention.

The metal 3D printer 1000 according to the present invention includes a laser irradiation part 100 and an object forming part 200.

The laser irradiation part 100 serves to irradiate a laser beam onto metal powder so that the metal powder is sintered or melted to create a solid object.

The laser irradiation part 100 includes a laser beam oscillator 110, a beam expander 120, and a beam scanner 130.

The laser beam is generated from the laser beam oscillator 110, and the diameter (spot size) of the laser beam generated from the laser beam oscillator 110 is varied by means of the beam expander 120.

The beam expander 120 can vary the diameter of the laser beam through position changes of two lenses. To move the two lenses, in this case, the beam expander 120 may further include a step motor, an ultrasonic motor, etc.

The laser beam passing through the beam expander 120 is reflected by the beam scanner 130 and thus emitted to the metal powder. In this case, the beam scanner 130 may include a galvano mirror. Without being limited thereto, of course, the beam scanner 130 may include a polygon wheel. If the beam scanner 130 includes the galvano mirror, the beam scanner 130 moves along the scanning path of the laser beam for printing. If the beam scanner 130 includes the polygon wheel, otherwise, the polygon wheel rotates to vary the refraction angle of the laser beam so that the laser beam passing through the lenses is irradiated onto another position.

Further, the laser irradiation part 100 may include a mirror (not shown) disposed between the beam oscillator 110 and the beam expander 120 and/or between the beam expander 120 and the beam scanner 130 to adjust the path of the laser beam.

The object forming part 200 includes a powder applicator 210 and an object forming box 220.

The powder applicator 210 includes a hopper 211 and a recoater 212.

The hopper 211 serves to supply the metal powder stored therein to the recoater 212, and the recoater 212 receives the metal powder from the hopper 211, moves in one direction, applies the metal powder to top of a working table 20 and an object forming stage 221, and moves in a reverse direction to flatten the metal powder to a regular height. A roller or blade type of recoater 212 may be used. The hopper 211 and the recoater 212 are well known in this art, and therefore, an explanation on them will be avoided.

The object forming box 220 is open on top thereof to form an internal space in which the metal powder is received to create the solid object. The object forming box 220 is mounted or demounted to the form of a rail in or from an object forming chamber of a frame (not shown) . An opening of the frame has the shape corresponding to the top of the object forming box 220, and if the object forming box 220 is accommodated in the object forming chamber, the top of the object forming box 220 is in an open state.

The object forming stage 221 is accommodated in the object forming box 220. The object forming stage 221 is ascendable and descendable in the interior of the object forming box 220. The object forming stage 221 is initially ascended up to a height of the opening of the working table 20, and as the metal powder is sintered or melted by means of the powder applicator 210 and the laser irradiation part 100, the object forming stage 221 is descended. After that, a large amount of metal powder is collected in the object forming box 220.

Through the laser beam irradiated from the laser irradiation part 100, the metal powder is laminated on the object forming stage 221 to form a plurality of layers constituting sectional layers of the solid object, so that the solid object is finally made. To obtain excellent precision of the solid object, in this case, the alignment of the object forming box 220 and the sealing structure of the object forming box 220 are important. However, the object forming box 220 and the object forming stage 221 are well known in this art, and therefore, an explanation on them will be avoided.

As mentioned above, the laser beam irradiated from the laser irradiation part 100 is irradiated onto the metal powder to apply heat energy to the metal powder, and as a result, the metal powder is sintered or melted to create the solid object. In this process, pores may be formed among particles of the metal powder, which undesirably causes the solid object to be deformed.

According to the present invention, to solve the above-mentioned problem, the diameter of the laser beam irradiated onto the metal powder is adjustable according to the particle size of the metal powder. In this case, the particle size may be the mean particle size of the metal powder.

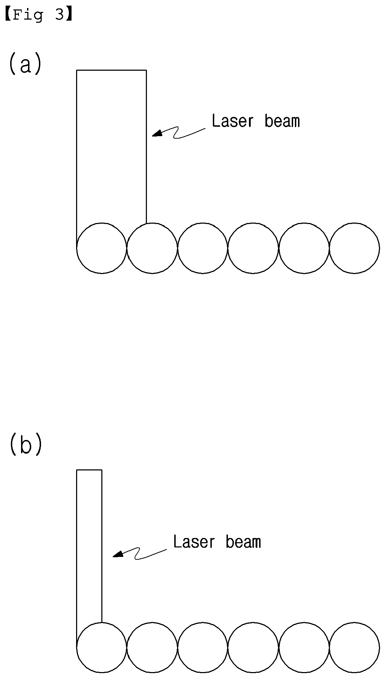

FIGs. 3a and 3b are schematic views showing the relation between the laser beam and the metal powder of the metal 3D printer according to the present invention.

In specific, the diameter of the laser beam is desirably 0.4 to 0.7 times, more desirably 0.5 times smaller than the mean particle diameter of the metal powder.

Referring to FIG. 3a, the diameter of the laser beam is generally larger than the mean particle diameter of the metal powder, and when the laser beam is irradiated, accordingly, a plurality of metal powder particles are sintered or melted. In this case, however, this inventor has found that a large number of pores are formed inside the created solid object.

According to the present invention, as shown in FIG. 3b, the diameter of the laser beam is desirably 0.4 to 0.7 times, more desirably 0.5 times smaller than the mean particle diameter of the metal powder, and accordingly, the heat energy is applied a plurality of times to the metal powder, thereby remarkably enhancing the precision of the solid object.

Generally, the diameter of the laser beam is larger than the particle diameter of the metal powder, and in this case, the heat energy of the laser beam is applied one time to the metal powder. Accordingly, melting is not carried out well to thus form pores among the particles of the metal powder, thereby making the performance of the solid object deteriorated badly. According to the present invention, however, the heat energy of the laser beam is applied a plurality of times to the metal powder, and as a result, melting among the particles of the metal powder is effectively carried out, thereby creating the solid object with high object forming precision and excellent performance.

### Test Example

Metal powder having a mean particle diameter of 30 um was applied to a bed, and after a diameter of a laser beam was set to 20 µm, heat energy was applied to the metal powder to create a solid object.

Tensile strength and yield strength of the solid object were measured.

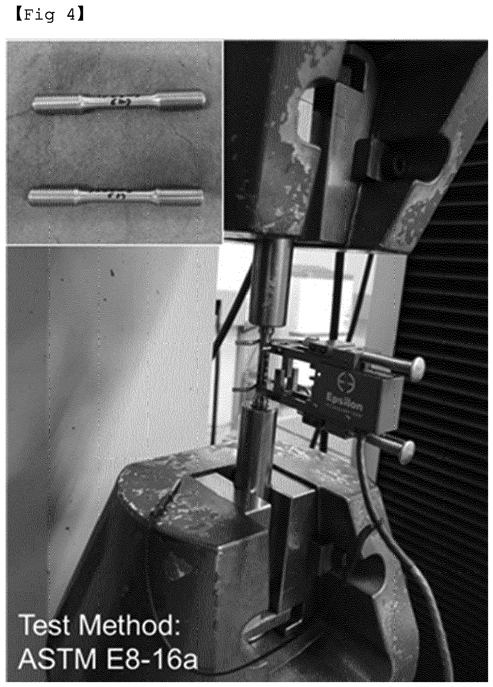

The measurement was carried out according to standard test methods for tension testing of metallic materials, ASTM E8-16a, and the test was carried out at a room temperature so as to test the tensile of a metallic material having a specific shape, specifically to test the yield strength, yield point elongation, tensile strength, rate of reduction in area, and the like (See FIG. 4).

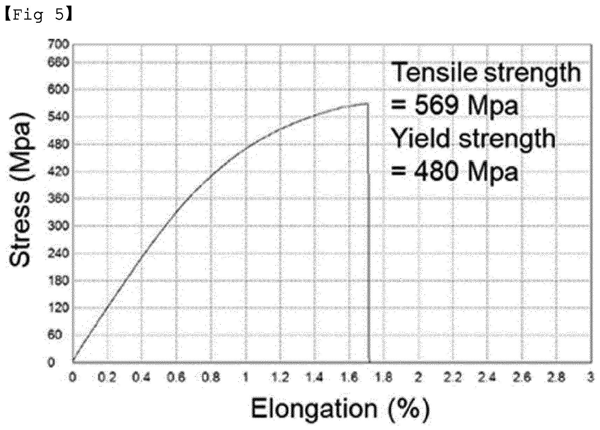

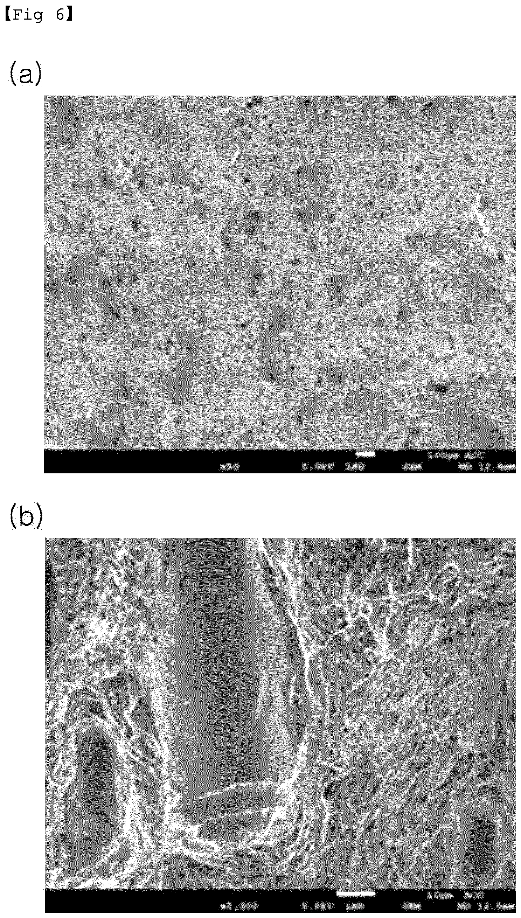

FIG. 5 is a graph showing measured results of the tensile test when the laser beam has a diameter of 20 um, and FIGs. 6a and 6b are enlarged photographs showing the output object when the laser beam has a diameter of 20 µm.

Referring first to FIG. 5, metal powder having a mean particle diameter of 30 µm was applied to a bed, and after a diameter of a laser beam was set to 20 µm, the laser beam was irradiated to the metal powder to create an output object. The tensile strength of the output object was 989 Mpa, and the yield strength of the output object was 890 Mpa.

When the laser beam had a diameter of 20 um, further, it was checked that melting among the particles of the metal powder was effectively carried out so that upon tensile test, intergranular fracture or transgranular fracture was generated (See FIGs. 6a and 6b), the tensile strength and the yield strength were excellent over the standards of ASTM, and the elongation near to the standards was generated.

### Comparison Example

Metal powder having a mean particle diameter of 30 um was applied to a bed, and after a diameter of a laser beam was set to 50 µm, heat energy was applied to the metal powder to create a solid object.

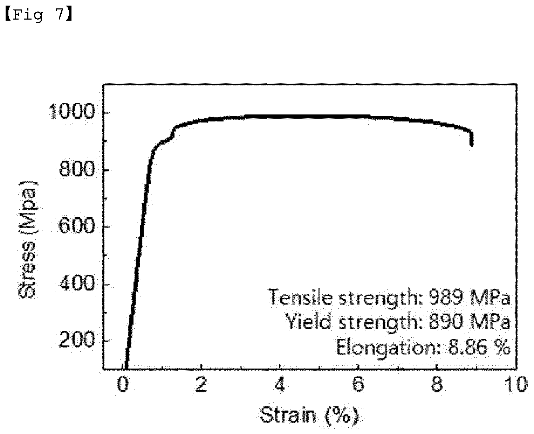

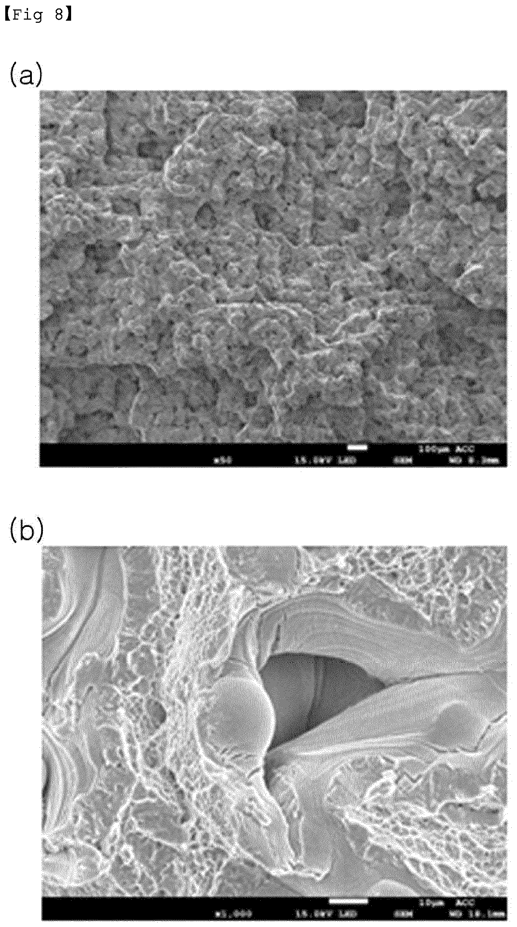

FIG. 7 is a graph showing measured results of the tensile test when the laser beam has a diameter of 50 µm, and FIGs. 8a and 8b are enlarged photographs showing the output object when the laser beam has a diameter of 50 µm.

Referring to FIG. 7, metal powder having a mean particle diameter of 30 µm was applied to a bed, and after a diameter of a laser beam was set to 50 um, the laser beam was irradiated to the metal powder to create an output object. The tensile strength of the output object was 569 Mpa and the yield strength of the output object was 480 Mpa.

When the laser beam had a diameter of 50 um, further, it was checked that melting among the particles of the metal powder was not carried out well so that fracture on the boundaries of the particles of the metal powder was generated and the mechanical properties of the output object became bad.

Results of the two tests are as follows.

**[Table 1]**

| | Tensile strength | Yield strength |
|---|---|---|
| 50 µm (Diameter of laser beam) | 569 Mpa | 480 Mpa |
| 20 µm (Diameter of laser beam) | 989 Mpa | 890 Mpa |

As mentioned above, the metal 3D printer according to the present invention can adjust the diameter of the laser beam according to the particle sizes of the metal powder to thus create the solid object with high precision and excellent mechanical properties.

In the description, all examples or exemplary terms (for example, and the like) are used just to explain the present invention, and therefore, they do not limit the scope of the present invention unless they are limited by the appended claims. Further, it will be appreciated to one skilled in the art that the present invention may be configured according to design conditions and factors within the scope of the claims or their equivalents to which variations, combination, and modification are added.

Although the present invention has been described with an exemplary embodiment, various changes and modifications may be suggested to one skilled in the art. It is intended that the present disclosure encompass such changes and modifications as fall within the scope of the appended claims.

### [Industrial Applicability]

According to the present invention, the metal 3D printer is configured to adjust the diameter of the laser beam according to the particle size of the metal powder to thus create the solid object with high precision.

## Claims

1. A metal 3D printer for applying heat energy to metal powder through irradiation of a laser beam onto the metal powder to create a solid object, wherein a diameter of the laser beam is adjustable according to a particle diameter of the metal powder.

2. The metal 3D printer according to claim 1, comprising a laser irradiation part having a laser beam oscillator for oscillating the laser beam, a beam expander for adjusting the diameter of the laser beam oscillated from the laser beam oscillator, and a beam scanner for scanning the laser beam passing through the beam expander to irradiate the laser beam onto a target position.

3. The metal 3D printer according to claim 1, wherein the diameter of the laser beam is 0.4 to 0.7 times smaller than the particle diameter of the metal powder.

4. The metal 3D printer according to claim 3, wherein the diameter of the laser beam is 0.5 times smaller than the particle diameter of the metal powder.
